# NEUE EUROPÄISCHE PATENTSCHRIFT

(11) **EP 1 759 021 B2**
(45) Veröffentlichungstag und Bekanntmachung des Hinweises auf die Entscheidung über den Einspruch: **07.10.2020**
(45) Hinweis auf die Patenterteilung: 18.01.2012
(21) Anmeldenummer: 05740015.2
(22) Anmeldetag: 03.05.2005
(51) Int. Cl.: C13B 10/08

(54) **EXTRAKTION VON INHALTSSTOFFEN AUS RÜBENSCHNITZELN**
EXTRACTION OF CONSTITUENTS FROM SUGAR BEET CHIPS
EXTRACTION DE CONSTITUANTS DE LA PULPE DE BETTERAVE A SUCRE

(30) Priorität: 16.06.2004 DE 102004028782
(43) Veröffentlichungstag der Anmeldung: 07.03.2007
(73) Patentinhaber: Südzucker Aktiengesellschaft Mannheim/Ochsenfurt, 68165 Mannheim (DE)
(72) Erfinder: ARNOLD, Jochen, 67283 Obrigheim (DE); FRENZEL, Stefan, 69469 Weinheim (DE); MICHELBERGER, Thomas, 67269 Grünstadt (DE); SCHEUER, Timo, 67549 Worms (DE)
(74) Vertreter: Schrell, Andreas
(86) Internationale Anmeldenummer: PCT/EP2005/004769
(87) Internationale Veröffentlichungsnummer: WO 2005/123967

(56) Entgegenhaltungen:
- WO-A-99/64634
- HOFFMANN J: "Wie kommt der Zucker aus der Rübe" IDW, 13. Dezember 2002 (2002-12-13), XP002276912
- DATABASE COMPENDEX [Online] ENGINEERING INFORMATION, INC., NEW YORK, NY, US; 2002, XP002337397 Database accession no. E2002116885133 & ESHTIAGHI M N ET AL: "High electric field pulse pretreatment: Potential for sugar beet processing" J FOOD ENG; JOURNAL OF FOOD ENGINEERING MAY 2002, Bd. 52, Nr. 3, Mai 2002 (2002-05), Seiten 265-272,

## Beschreibung

Die vorliegende Erfindung betrifft ein Verfahren zur verbesserten Extraktion und anschließenden Gewinnung von Inhaltsstoffen aus Zuckerrüben (*Beta vulgaris*) beziehungsweise Zuckerrübenschnitzeln.

Aus einer Vielzahl verschiedenartigen biologischen Materials, insbesondere pflanzlicher Rohstoffe wie agrikulturell gewonnener Früchte, werden bekanntermaßen mit mechanischen und/oder thermischen Verfahren wertvolle Inhaltsstoffe gewonnen. Um diese Inhaltsstoffe aus dem biologischen Material abtrennen zu können, müssen in jedem Fall die Membranen des Zellmaterials, insbesondere der Pflanzenzelle, geöffnet werden. Dies geschieht in der Regel durch mechanische Krafteinwirkungen wie Schneiden, Reiben, Walzen etc. Andere Verfahren zum Aufschluss der Zellmembranen des biologischen Materials sind der thermische Zellaufschluss, wobei die Zellmembranen durch den Temperatureinfluss denaturiert werden, oder die Kombination von thermischen Verfahren und mechanischen Verfahren. Nach dem Aufschlussprozess werden die löslichen Inhaltsstoffe des biologischen Materials abgepresst, mit Lösungsmittel, meist Wasser, extrahiert oder im Falle nicht löslicher Stoffe ausgeschwemmt. WO 99/64634 beschreibt die Anlage "ESTERIL", die der Elektroporation dient. Eine Vorrichtung zur Zerkleinerung von Rüben in Rübenschnitzel ist bei dieser Anlage nicht vorhanden. HOFFMANN J: "Wie kommt der Zucker aus der Rübe", IDW, 13-12-2002 beschreibt die mobile Elektroporations-Anlage "KEA", in der kurze Impulse von 300.000 V mit 1 Millionstel Sekunde auf die Zuckerrüben treffen.

Solche Verfahren zur Gewinnung von Inhaltsstoffen aus biologischem Material sind besonders relevant für die Zuckerindustrie, da in Mitteleuropa bekanntermaßen zur Gewinnung von Zucker (Saccharose) Zuckerrüben (*Beta vulgaris*) in solchen Verfahren verarbeitet werden müssen, um daraus den Zucker zu gewinnen. Herkömmlicherweise werden dabei die gewaschenen Rüben in konventionellen Schneidmaschinen geschnitzelt und die erhaltenen Schnitzel in einer Schnitzelmaische mit heißem Wasser bei cirka 70 bis 75°C überbrüht. Dabei werden die Rübenzellen thermisch denaturiert, das heißt die Zellwände werden aufgeschlossen und dadurch durchlässig für Saccharosemoleküle. In einem anschließenden Extraktionsprozess, üblicherweise mittels Gegenstromextraktion, wird bei Temperaturen von cirka 68 bis 70°C ein saccharosehaltiger Extrakt (Rohsaft) gewonnen.

Um eine effektive Extraktion zu ermöglichen, muss bekanntermaßen ein erheblicher Anteil an Fremdwasser (Kondensat) zugesetzt werden. Zur Optimierung des Extraktionsvorgangs und zur Verminderung des Restgehalts an Zucker in den extrahierten Schnitzeln wird in den bekannten Verfahren in Bezug auf die Schnitzelmenge üblicherweise cirka 105% bis 110% Rohsaft abgezogen. Der Abzug berechnet sich aus dem Verhältnis der Extraktmenge zur eingesetzten Rübenmenge. Anschließend kann eine Saftreinigung des Extrakts durchgeführt werden.

Neben der für die Extraktion benötigten erheblichen Menge an Fremdwasser ist die Verarbeitung von biologischem Material zur Gewinnung der Inhaltsstoffe auch ein stark energieaufwändiges Verfahren. Insbesondere der thermische Aufschluss des biologischen Materials bei üblichen Temperaturen von über 70°C verlangt hohen Energieeintrag. Aber auch für den nachfolgenden Extraktionsschritt muss ein erheblicher Anteil an Fremdwasser auf Temperaturen über 70°C erhitzt und im weiteren Prozessverlauf wieder aufwändig verdampft werden. Es besteht daher aus dem Stand der Technik das Bedürfnis, biologisches Material, insbesondere Zuckerrüben beziehungsweise Zuckerrübenzellen, mit geringem Energieverbrauch aufzuschließen und durch Anwendung eines geeigneten nachgeschalteten Verfahrens die Wasser- und Energiemenge für die Gewinnung der Inhaltsstoffe aus dem biologischen Material zu reduzieren.

Die SU1521439A zeigt Verfahren und Mittel zur Elektroporation von vorgepressten Rübenschnitzeln bis hin zu einer Massekonzentration von 1100 kg/m³.

Technisches Problem der vorliegenden Erfindung ist es, ein verbessertes Verfahren zur Extraktion und anschließenden Gewinnung von Inhaltsstoffen aus biologischem Material, nämlich Rübenschnitzeln, sowie eine Vorrichtung zur Durchführung des verbesserten Verfahrens bereitzustellen, wobei sich das verbesserte Verfahren insbesondere durch eine hohe Effizienz und Wirtschaftlichkeit bei gleichzeitig geringem Verbrauch von Ressourcen wie Energie und Wasser auszeichnet.

Die vorliegende Erfindung löst das ihr zugrunde liegende technische Problem durch ein Verfahren zur Extraktion und optionalen anschließenden Gewinnung von Inhaltsstoffen aus Zuckerrüben umfassend die Schritte:
(a) Zerkleinerung der Zuckerrüben zu Rübenschnitzeln in einer Vorrichtung zur Zerkleinerung von Rüben in Rübenschnitzel unter Erhalt eines Schnitzel-Saft-Gemisches, anschließend
(b) Zugabe von Rohsaft oder Wasser zu dem erhaltenen Schnitzel-Saft-Gemisch zum Erhalt eines aufbereiteten Schnitzel-Saft-Gemisches mit einer Leitfähigkeit von 2,6 mS/cm bis 10 mS/cm und
(c) Einstellen einer Rübenschnitzelschüttdichte von 400 kg/m³ bis 800 kg/m³ in dem aufbereiteten Schnitzel-Saft-Gemisch in einer Elektroporationsvorrichtung, anschließend
(d) Durchführen einer Elektroporation des in Schritt (c) erhaltenen aufbereiteten Schnitzel-Saft-Gemisches und anschließend
(e) Extraktion des erhaltenen elektroporierten Schnitzel-Saft-Gemisches in einem Extraktor
und optional die Gewinnung oder Isolation von Inhaltsstoffen aus dem Extrakt des elektroporierten Schnitzel-Saft-Gemisches. Das technische Problem der vorliegenden Erfindung wird auch durch eine Anlage zur Extraktion von Inhaltstoffen aus Rübenschnitzeln gelöst, umfassend mindestens eine Vorrichtung zur Zerkleinerung von Rüben in Rübenschnitzel unter Erhalt eines Schnitzel-Saft-Gemisches, mindestens eine sich daran anschließende Vorrichtung zum Transport des erhaltenen Schnitzel-Saft-Gemisches, mindestens eine sich daran anschließende Vorrichtung zur Elektroporation des Schnitzel-Saft-Gemisches, mindestens eine sich daran anschließende Vorrichtung zur Weiterleitung des elektroporierten Schnitzel-Saft-Gemisches und mindestens eine sich daran anschließende Vorrichtung zur Extraktion des Schnitzel-Saft-Gemisches und eine Vorrichtung zum Einspeisen von Rohsaft, die so ausgebildet ist, dass sie zur Einspeisung von Rohsaft entweder in die Vorrichtung zum Transport des Schnitzel-Saft-Gemisches oder in die Vorrichtung zur Elektroporation geeignet ist.

Die erfindungsgemäße Vorgehensweise, bei der für die Elektroporation ein Medium vergleichsweise hoher Leitfähigkeit eingesetzt wird, ist unter anderem überraschend insofern, als das üblicherweise gemeinhin davon ausgegangen wurde, dass der Aufbau eines für die Elektroporation notwendigen starken elektrischen Feldes geringe Leitfähigkeiten in der Schnitzel-Saft-Suspensionslösung voraussetzt. Da bei der Elektroporation von Schnitzeln in kurzer Zeit aufgrund von Stoffübergängen, zum Beispiel Zucker und Salze, vom Schnitzel in die Suspension hohe Leitfähigkeiten auftreten, musste davon ausgegangen werden, dass größere Mengen Frischwasser in den Reaktor nachgespeist werden müssen, um diesem Anstieg der Leitfähigkeit entgegenwirken zu können. Erfindungsgemäß konnte gezeigt werden, dass die Elektroporation von Schnitzeln, insbesondere bei Einstellung einer hohen Schüttdichte der Schnitzel, der Elektroporation von Rüben überlegen ist. Darüber hinaus ermöglicht es die Elektroporation von Schnitzeln im Gegensatz zur Elektroporation von den erheblich größeren kompakteren und temperatur-trägeren Rüben das zu elektroporiende Gut, nämlich die Schnitzel, vor der Elektroporaiton anzuwärmen. Die in der Regel in der Erntezeit kalten Rüben dagegen sind mit einem vertretbaren Energieaufwand nicht zu erwärmen. Die erfindungsgemäße Vorgehensweise, die Elektroporation der Schnitzel in der angegebenen Weise durchzuführen, ermöglicht es daher, dass Elektroporationsgut vorab anzuwärmen, zum Beispiel auf Temperaturen von 5 bis 40°C, vorzugsweise 10 bis 40°C, sodass anschließend aufgrund der höheren Temperaturen des Elektroporationsguts eine effizientere Elektroporation durchgeführt werden kann, beziehungsweise eine Elektroporation bei geringeren Feldstärken ermöglicht wird. Die genannte Erwärmung des Elektroporationsguts ist erfindungsgemäß allein bei Schnitzeln, nicht dagegen bei Rüben möglich und führt zu einer entsprechenden Reduzierung der Feldstärken. Die Erfindung stellt daher ein besonders effizientes und kostengünstiges Verfahren zur Verfügung.

Die Erfindung sieht vor, dass in einem ersten Verfahrensschritt Zuckerrüben zu Rübenschnitzeln zerkleinert werden. Rübenschnitzel im Zusammenhang mit der vorliegenden Erfindung sind zerteilte beziehungsweise in Scheiben geschnittene Rüben. Die Erfindung sieht vor, dass Zuckerrüben, zum Beispiel in einer Schneidmaschine, zu Rübenschnitzeln verarbeitet werden, wobei ein Schnitzel-Saft-Gemisch gebildet wird, welches die zerschnittenen Rüben sowie austretenden Zellsaft umfasst.

Dem Schnitzel-Saft-Gemisch wird ein Medium, zum Beispiel Wasser, vorzugsweise Rohsaft, insbesondere alkalisierter Rohsaft, zum Beispiel aus einer alkalischen Rübenextraktion, insbesondere alkalischen Rübenschnitzelextraktion hinzugegeben, wobei ein aufbereitetes (auch als Medium-haltig bezeichnet) Schnitzel-Saft-Gemisch erhalten wird, welche eine Leitfähigkeit von 2,6 mS/cm bis 10,0 mS/cm aufweist. In diesem Medium-haltigen Schnitzel-Saft-Gemisch, welches sich bevorzugt in einer Vorrichtung zur Elektroporation befindet, wird gleichzeitig oder unmittelbar anschließend eine Schüttdichte an Rübenschnitzeln von 400 kg/m³ bis 800 kg/m³ eingestellt, wobei erfindungsgemäß bevorzugt in dem mit dieser Rübenschnitzelschüttdichte eingestellten aufbereiteten Schnitzel-Saft-Gemisch keine oder nur sehr geringe Lufteinschlüsse vorhanden sind. Die erfindungsgemäß eingesetzte Schüttdichte kann vorzugsweise durch einen durch zum Beispiel in einem Einfallschacht durch angestautes Schnitzelmaterial aufgebauten Vordruck bewirkt werden. Der Einsatz des Medium-haltigen Schnitzel-Saft-Gemisches unter Beachtung der vorgenannten Schnitzelschüttdichte ermöglicht die anschließende lufteinschlussfreie Durchführung einer Elektroporation in energetisch günstiger Weise. Das elektroporierte Schnitzel-Saft-Gemisch, dass heisst also das einer Elektroporation ausgesetzte Schnitzel-Saft-Gemisch, wird anschließend zur Extraktion in einen Extraktor weitergeleitet und anschließend können dann in üblichen Verfahrensschritten Inhaltsstoffe wie Zucker gewonnen werden, zum Beispiel im Wege der Verdampfungs- und/oder Kühlungskristallisation.

In einer weiteren bevorzugten Ausführungsform betrifft die Erfindung ein vorgenanntes Verfahren, wobei die Zugabe des Mediums und die Einstellung der Leitfähigkeit in Schritt (b) auch in Schritt (c) erfolgen können, also Schritte (b) und (c) zusammenfallen. Ebenso kann Schritt (c) zeitlich vor Schritt (b) durchgeführt werden. In einer besonders bevorzugten Ausführungsform ist vorgesehen, dass die Leitfähigkeit in Schritt (b) und/ oder (c) auf 2,6 mS/cm bis 6,0 mS/cm eingestellt wird.

In einer weiteren bevorzugten Ausführungsform ist vorgesehen, dass die in Schritt (c) eingestellte Schüttdichte auf 450 kg/m³ bis 700 kg/m³ eingestellt wird.

In einer bevorzugten Ausführungsform ist vorgesehen, dass die Schnitzel oder das Schnitzel-Saft-Gemisch oder das aufbereitete Schnitzel-Saft-Gemisch vor der Elektroporation auf eine gegenüber den geernteten Rüben erhöhte Temperatur aufgewärmt wird, insbesondere 5 bis 40°C, vorzugsweise 10 bis 40°C, besonders bevorzugt 15 bis 35°C.

Durch die erfindungsgemäß durchgeführte Elektroporation von Rübenschnitzeln werden besonders vorteilhaft die Zellen des biologischen Materials, also der Rübenschnitzel, unter Einsatz von Hochspannungsimpulsen geöffnet. Deshalb ist eine thermische Öffnung dieser Zellen für eine nachgeschaltete Extraktion nicht notwendig.

Im Zusammenhang mit der vorliegenden Erfindung werden unter "biologischem Material" Rübenschnitzel (*Beta vulgaris*) verstanden.

Im Zusammenhang mit der vorliegenden Erfindung wird unter Extraktion ein Trennverfahren zum Herauslösen von bestimmten Bestandteilen, insbesondere Inhaltsstoffen, aus festen oder flüssigen Substanzemischen, insbesondere biologischem Material, mit Hilfe geeigneter Lösungsmittel, wobei zwischen dem Lösungsmittel und dem gelösten Stoff, das heißt dem Inhaltsstoff des biologischen Materials, keine chemischen Reaktionen stattfinden. Bei der Gewinnung von wasserlöslichen Inhaltsstoffen wie Saccharose, Inulin, Stärke aus biologischem Material wird bevorzugt Wasser als Extraktionsmittel eingesetzt, beispielsweise bei der Gewinnung von Zucker aus Zuckerrübenschnitzeln. In einer Variante können zusätzlich oder ausschließlich fettlösliche Inhaltsstoffe durch die Verwendung von überwiegend unpolaren und/oder organischen Lösungsmitteln aus dem biologischen Material gewonnen werden.

Gemäß der vorliegenden Erfindung wird Schritt (d) des erfindungsgemäßen Verfahrens, nämlich die Elektroporation des biologischen Materials, in einem leitfähigen Medium, nämlich in einem sich während der in Schritt (a) erfolgenden Rübenzerkleinerung bildenden Schnitzel-Saft-Gemisch beziehungsweise -Suspension, gegebenenfalls unter Zugabe von Wasser oder Rohsaft, bevorzugt jedoch unter Zugabe von alkalisiertem Rohsaft, durchgeführt, wobei das biologische Material einem Hochspannungsfeld ausgesetzt wird. Bevorzugt ist vorgesehen, dass das Hochspannungsfeld in an sich bekannter Weise, beispielsweise über spannungsführende Elektroden, durch Anlegen einer Spannung, insbesondere einer Hochspannung, über das biologische Material erzeugt wird. Bevorzugt werden impulsförmige Hochspannungsverläufe eingesetzt, aber auch periodische Wechselfelder und Gleichspannungsfelder sind vorgesehen. Die Feldstärke beträgt vorzugsweise 0,1 bis 20 kV/cm, vorzugsweise etwa 1 bis 5 kV/cm, insbesondere 2 bis 4 kV/cm. In einer besonders bevorzugten Variante ist die Leitfähigkeit des Mediums, worin sich das biologische Material befindet, so an die Leitfähigkeit des biologischen Materials angepasst, dass ein optimaler Feldlinienverlauf innerhalb des biologischen Materials erreicht wird, insbesondere beträgt die Leitfähigkeit 2,6 bis 10,0 mS/cm, vorzugsweise 2,6 bis 6,0 mS/cm.

Ohne auf die Theorie beschränkt zu sein, wird, da durch die Elektroporation bereits eine Öffnung der Zellen stattgefunden hat, die Anforderung an die nachfolgende Extraktion wesentlich reduziert, so dass die Extraktion des biologischen Materials bei gegenüber üblichen Verfahren signifikant niedrigen Temperaturen stattfinden kann. Das erfindungsgemäß bevorzugte Verfahren zeichnet sich daher auch dadurch aus, dass der Extraktionsschritt (e) bei einer im Versgleich zum Stand der Technik wesentlich erniedrigten Temperatur, das heißt einer Temperatur von 0 bis 65°C, insbesondere 10 bis 65°C, vorzugsweise von 45 bis 60°C, insbesondere 46 bis 60°C, durchgeführt wird. Selbstverständlich kann die Extraktionstemperatur an die Erfordernisse des biologischen Materials angepasst werden und auch noch wesentlich niedriger oder höher liegen, soweit eine Extraktion noch durchgeführt werden kann. Aufgrund der Verringerung der Extraktionstemperatur wird das biologische Material, nämlich die Rübenschnitzel, schonender behandelt als bei dem herkömmlichen Verfahren der thermischen Denaturierung. Dadurch ergibt sich erfindungsgemäß vorteilhaft eine Erhöhung der Abpressbarkweit des biologischen Materials, beispielsweise die Rübenschnitzel, um cirka 2%-Punkte an %TS (TS = Trockensubstanz).

Erfindungsgemäß ist auch in einer Ausführungsform vorgesehen, dass der gereinigte Extrakt, insbesondere der Dünnsaft I und II, anschließend in einer mehrstufigen Verdampfungsanlage auf cirka 70 % Trockensubstanzgehalt eingedickt wird.

Erfindungsgemäß bevorzugt wird aus dem aus der Extraktion erfindungsgemäß behandelter Zuckerrübenschnitzel erhaltenen Extrakt und/oder Dünnsaft in einer mehrstufigen Kristallisationsanlage der Zucker gewonnen. Das extrahierte biologische Material, insbesondere die extrahierten Rübenschnitzel, werden anschließend noch mechanisch entwässert und beispielsweise mit Melasse vermischt und bevorzugt nach der thermischen Trocknung als Futtermittel, insbesondere als Futtermittelpellets, vermarktet.

In einer bevorzugten Variante findet die Extraktion in Schritt (e) als alkalische Extraktion statt, insbesondere unter Verwendung von Alkalisierungsmitteln wie Kalkmilch und/oder Branntkalk. Unter "alkalisch" wird in diesem Zusammenhang der pH-Wert eines wässrigen Mediums von pH 7 bis pH 14 (bei 20°C) verstanden. In einer bevorzugten Variante wird die alkalische Extraktion bei pH 7,5 bis pH 11, insbesondere bei circa pH 10, beispielsweise pH 10,2 durchgeführt.

Bei einer alkalischen Extraktion können chemische Reaktionen mit dem biologischen Material nicht in allen Fällen ausgeschlossen werden, insbesondere kann ein Anteil hochmolekularem Calciumpektat gebildet werden. Bei bekannten Extraktionstemperaturen von circa 70 bis 75°C sind diese unerwünschten chemischen Reaktionen der alkalischen Extraktion so heftig, dass zum Teil große Mengen an Calciumpektat gebildet werden, welches die Filtration des gewonnenen, vorzugsweise durch Saftreinigung gereinigten Extraktes, wesentlich erschwert, so dass ein solches Verfahren, nicht in die Praxis umgesetzt werden kann. Demgegenüber vermindert die erfindungsgemäß bevorzugte alkalische Extraktion, welche bei niederen Temperaturen durch geführt wird, die Bildung dieser hochmolekularen Verbindungen, wodurch bei der Filtration des gereinigten Extraktes, insbesondere des bei der Zuckerrübenextraktion durch Saftreinigung erhaltenen Dünnsafts I und/oder Dünnsafts II, ein Filtrationskoeffizient von weniger als 1 mm/g erreicht wird.

Der Eintrag der Alkalität in das biologische Material, also zu den Rübenschnitzeln, beispielsweise in Form von Kalkmilch, Calciumhydroxid, Calciumsaccharat oder Branntkalk, findet bevorzugt bereits unmittelbar nach der Elektroporation (Schritt (d)) statt, zum Beispiel in einem Zwischenbunker, vor der weiteren Verarbeitung des biologischen Materials. In einer weiteren Variante wird die Alkalität ummittelbar vor der Durchführung der Extraktion (Schritt (e)) eingebracht.

In einer bevorzugten Ausführungsform der Erfindung erfolgt die Alkalisierung des biologischen Materials, also der Rübenschnitzel, durch Zugabe des Alkalisierungsmittels direkt in die Schneidmaschine, dass heisst die Vorrichtung zur Zerkleinerung der Rüben, also in Schritt (a), oder/und anschließend in Schritt (b) und/oder in Schritt (c). Dies hat den Vorteil einer Teildesinfektion des biologischen Materials.

Erfindungsgemäß bevorzugt wird die Alkalität in Form wässriger Lösungen in das biologische Material eingebracht, bevorzugt aufgesprüht. In einer weiteren Variante wird zum Zwecke des Eintrags der Alkalität auf das biologische Material mindestens ein alkalischer Stoff, insbesondere Kalk wie Branntkalk, als Feststoff, bevorzugt in Pulverform, in das Verfahren eingebracht.

Durch den Eintrag der Alkalität auf das biologische Material wird eine Verminderung des Infektionsrisikos des biologischen Materials und die Erhöhung der mikrobiologischen Stabilität des biologischen Materials und des abgetrennten Zellsafts während der Verarbeitung erreicht. Die mikrobiologische Stabilität liegt dabei bei circa 104 KBE/ml.

In einer weiteren bevorzugten Variante wird im erfindungsgemäßen Verfahren, zum Beispiel in Schritt (a), (b), (c), (d) und/oder (e) dem biologischen Material mindestens ein Hilfsstoff zugeführt. Im Zusammenhang mit der vorliegenden Erfindung wird unter einem "Hilfsstoff" eine Zusammensetzung oder chemische Reinsubstanz verstanden, welche im gewonnenen Inhaltsstoff, bevorzugt dem gewonnenen Lebensmittel, keinerlei Funktion innehat. Dies sind Betriebsstoffe wie Kondensat, aber auch Prozesswasser, Lösemittel, Desinfektionsmittel wie Formaldehyd oder Schaumdämpfungsmittel. Bevorzugt sind dies auch Flockungshilfsmittel wie kationische oder anionische Flockungshilfsmittel, Substanzen für den Eintrag von Alkalität und/oder von Calciumionen wie Kalkmilch, Branntkalk, Calciumhydroxid, Calciumsaccharat, Calciumsulfat und andere Calciumsalze und/oder Aluminiumsalze. Der erfindungsgemäß bevorzugt zugeführte mindestens eine Hilfsstoff wird normalerweise in Form einer Lösung in das biologische Material eingebracht, bevorzugt aufgesprüht. In einer weiteren Variante wird der mindestens eine Hilfsstoff als Feststoff, bevorzugt in Pulverform, eingebracht.

Besonders vorteilhaft werden durch die erfindungsgemäße Elektroporation des biologischen Materials in Schritt (d) die Zellwände der Rübenzellen geöffnet, was den Eintrag von Alkalität und/oder Calciumionen in das biologische Material erleichtert. Insbesondere durch die erfindungsgemäß bevorzugte Kombination von Elektroporation in Schritt (d) und der, insbesondere alkalischen, Extraktion in Schritt (e) kommt es zu einer weiteren Steigerung der Entwässerbarkeit des biologischen Materials nach Abschluss des erfindungsgemäßen Verfahrens, beispielsweise durch Abpressen um bis zu cirka 8%-Punkte Trockensubstanzgehalt (%TS).

Bevorzugter Gegenstand der vorliegenden Erfindung ist daher auch ein Verfahren zur Erhöhung der Abpressbarkeit von extrahiertem biologischem Material, insbesondere von Zuckerrübenschnitzeln, und damit des bei der Abpressung erreichbaren Trockensubstanzanteils, dadurch gekennzeichnet, dass in einem ersten Schritt eine Elektroporation des biologischem Materials, insbesondere von Zuckerrübenschnitzeln gemäß der vorstehend ausgeführten Verfahrensschritte (b), (c) und (d), und in einem weiteren Schritt eine alkalische Extraktion des elektroporierten biologischen Materials, insbesondere elektroporierter Zuckerrübenschnitzel durchgeführt wird und anschließend extrahiertes biologisches Material mit erhöhter Abpressbarkeit erhalten wird.

Ein weiterer bevorzugter Gegenstand der vorliegenden Erfindung ist daher auch ein Verfahren zum Erhalt von extrahiertem biologischem Material, insbesondere von extrahierten Zuckerrübenschnitzeln, mit hohem Trockensubstanzanteil, vorzugsweise von circa 38% TS, umfassend die Schritte
(a) Zerkleinerung der Zuckerrüben zu Rübenschnitzeln in einer Vorrichtung zur Zerkleinerung von Rüben in Rübenschnitzel unter Erhalt eines Schnitzel-Saft-Gemisches, anschließend
(b) Zugabe von Rohsaft oder Wasser zu dem erhaltenen Schnitzel-Saft-Gemisch zum Erhalt eines aufbereiteten Schnitzel-Saft-Gemisches mit einer Leitfähigkeit von 2,6 mS/cm bis 10 mS/cm und gleichzeitig oder anschließend
(c) Einstellen einer Rübenschnitzelschüttdichte von 400 kg/m³ bis 800 kg/m³ in dem aufbereiteten Schnitzel-Saft-Gemisch in einer Elektroporationsvorrichtung, anschließend
(d) Durchführen einer Elektroporation des in Schritt (c) erhaltenen aufbereiteten Schnitzel-Saft-Gemisches und anschließend
(e) Extraktion des erhaltenen elektroporierten Schnitzel-Saft-Gemisches in einem Extraktor,
wobei in einem nachfolgenden Schritt das elektroporierte biologische Material, insbesondere elektroporierte Zuckerrübenschnitzel, vorzugsweise in an sich bekannter Weise abgepresst werden und anschließend extrahiertes biologisches Material mit erhöhtem Trockensubstanzgehalt erhalten wird.

Gegenstand der vorliegenden Lehre ist deshalb auch eine Anlage zur Extraktion und Gewinnung von Inhaltsstoffen aus biologischem Material, welche zur Durchführung des erfindungsgemäßen Verfahrens eingesetzt wird. Erfindungsgemäß weist diese Anlage zur Extraktion von Inhaltsstoffen aus Rübenschnitzeln mindestens eine Vorrichtung zur Zerkleinerung von Rüben in Rübenschnitzel unter Erhalt eines Schnitzel-Saft-Gemisches, mindestens eine sich daran anschließende Vorrichtung zum Transport des erhaltenen Schnitzel-Saft-Gemisches, mindestens eine sich daran anschließende Vorrichtung zur Elektroporation des Schnitzel-Saft-Gemisches, mindestens eine sich daran anschließende Vorrichtung zur Weiterleitung des elektroporierten Schnitzel-Saft-Gemisches und mindestens eine sich daran anschließende Vorrichtung zur Extraktion des Schnitzel-Saft-Gemisches auf. Erfindungsgemäß weist diese Anlage auch eine Vorrichtung zum Einspeisen von Rohsaft, insbesondere alkalisierten Rohsaft auf. Die Anlage zum Einspeisen von Rohsaft ist so ausgebildet, dass sie zur Einspeisung von Rohsaft entweder in die Vorrichtung zum Transport des Schnitzel-Saft-Gemisches oder in die Vorrichtung zur Elektroporation geeignet ist. In besonders bevorzugter Ausführungsform ist diese Vorrichtung zum Einspeisen von Rohsaft als Leitung zwischen Extraktor, also der Vorrichtung zur Extraktion des Schnitzel-Saft-Gemisches, und der Elektroporationsvorrichtung ausgebildet. Es kann auch vorgesehen sein, dass die Vorrichtung zum Einspeisen von Rohsaft, insbesondere alkalisiertem Rohsaft, als Leitung zwischen Extraktor und Vorrichtung zur Zerkleinerung der Zuckerrüben oder anschließender Transportvorrichtung für das erhaltene Schnitzel-Saft-Gemisch ausgeführt wird.

Die erfindungsgemäße Anlage zur Extraktion von Inhaltsstoffen aus Rübenschnitzeln ist durch einen besonders geringen Bauaufwand gegenüber einem Reaktor zur Elektroporation von Rüben gekennzeichnet. Der Bauaufwand für die Elektroporation von Rüben ist beträchtlich, da insbesondere der vorhandene Rübenbunker angehoben werden muss, der Elektroporationsreaktor zwischen Rübenbunker und Schneidmaschine zu montieren ist, und separate Vorlagebunker für jede Schneidmaschine aufgebaut werden müssen sowie der Transport der elektroporierten und geschnittenen Schnitzel über Schnecken zur Maische (Vorrichtung zur Extraktion) erfolgen muss. Erfindungsgemäß ist demgegenüber vorgesehen, dass die Elektroporation von Schnitzeln durch Integration des Elektroporationsreaktors zwischen Schnitzelband und Schnitzelmaische erfolgt. In einer besonders bevorzugten Ausführungsform der vorliegenden Erfindung ist vorgesehen, dass der Einbau des Elektroporationsreaktor in den üblichen Einfallschacht vom Schnitzelband zur Schnitzelmaische erfolgt.

In einer bevorzugten Ausführungsform ist die erfindungsgemäße Vorrichtung zur Zerkleinerung der Rüben zu Rübenschnitzeln ein Schnitzelwerk, das heißt eine Schneidmaschine, vorzugsweise eine Trommelschneidmaschine, welche im Transportweg der Rüben angeordnet ist. In einer Variante ist das Schnitzelwerk mit einem Zwischenbunker zur Aufnahme der Rüben versehen, welches primär durch die Übereinanderstapelung des biologischen Materials die nötige Druckvorlage für dessen Zerkleinerung bereitstellt.

Erfindungsgemäß bevorzugt ist der Extraktor ein Turmextraktor. In einer Variante ist der Extraktor ein Trogschnecken-Extraktor wie ein DDS-Extraktor. In einer weiteren Variante ist der Extraktor ein Trommelzellenextraktor wie eine RT-Trommel.

In einer bevorzugten Ausführungsform der erfindungsgemäßen Vorrichtung ist zusätzlich mindestens eine Dosiervorrichtung zum Eintrag von Hilfsstoffen und/oder Alkalität vorgesehen. Diese Dosiervorrichtung enthält in einer Variante mindestens eine Spülleitung mit mindestens einem damit verbundenen Düsenkopf für das Sprühen von Lösungen von Hilfsstoffen und/oder alkalisierenden Mitteln wie Kalkmilch auf das biologische Material. In einer weiteren Variante ist die mindestens eine Dosiervorrichtung eine Vorrichtung, die dem Eintrag von Feststoffen, vorzugsweise pulverförmigen Medien dient, insbesondere ist dies ein pneumatischer Dosierer und/oder ein Spiralförderer.

Vorzugsweise ist die Dosiervorrichtung in einem Dosierbereich der Transportvorrichtung für das Schnitzel-Saft-Gemisch angeordnet. In einer Variante ist die Dosiervorrichtung in einem Dosierbereich des Zwischenbunkers angeordnet. In einer weiteren Variante ist die Dosiervorrichtung in einem Dosierbereich des Maischebehälters, also vor oder an dem Extraktor angeordnet. In diesem Zusammenhang wird unter einem "Dosierbereich" derjenige umgrenzte Raum verstanden, wovon über die gewählte Dosiervorrichtung das Dosiergut, das heißt die vorgenannten Hilfsstoffe, alkalisierenden Mittel etc., in beziehungsweise auf das biologische Material gebracht werden kann.

Weitere vorteilhafte Ausführungsformen ergeben sich aus den Unteransprüchen.

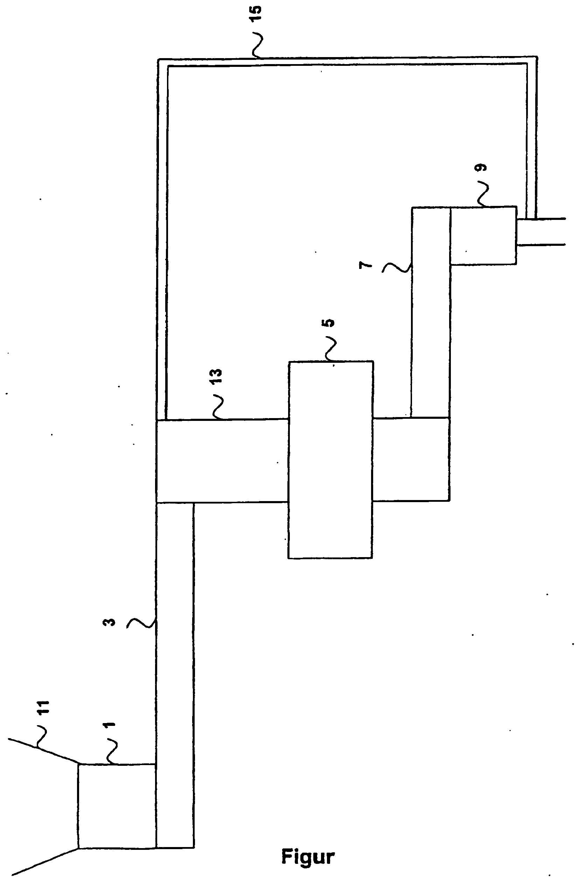

Die erfindungsgemäße Vorrichtung wird durch die Figur näher erläutert: Die Figur zeigt eine schematische Darstellung einer bevorzugten Ausführungsform der erfindungsgemäßen Vorrichtung.

Die Erfindung wird anhand des folgenden Beispiels näher erläutert:

### Beispiel:

### Alkalische Extraktion von elektroporiertem Rübenmaterial

Aus einem Zwischenbunker für Rüben (11) werden Rüben in eine Vorrichtung zur Zerkleinerung von Rüben zu Rübenschnitzeln (1) überführt. Das während der Zerkleinerung gebildete Schnitzel-Saft-Gemisch wird durch eine Vorrichtung zum Transport des erhaltenen Schnitzel-Saft-Gemisches (3) (Schnitzelband), einem Einfallschacht (13) zugeführt, in den eine Vorrichtung zur Elektroporation (5) integriert ist. Das elektroporierte Schnitzel-Saft-Gemisch verlässt die Vorrichtung zur Elektroporation (5) und gelangt über eine Vorrichtung zur Weiterleitung des elektroporierten Schnitzel-Saft-Gemisches (7) in eine Vorrichtung zur Extraktion des Schnitzel-Saft-Gemisches (9). Aus der Ableitung dieser Vorrichtung (9) führt eine Leitung (15) zur Einspeisung von aus der Vorrichtung zur Extraktion (9) erhaltenem alkalisierten Rohsaft in die Vorrichtung zur Elektroporation (5) beziehungsweise in den Einfallschacht (13), in den die Elektroporationsvorrichtung integriert ist.

Die erfindungsgemäße Verfahrensweise stellt sich wie folgt dar:

Unmittelbar geerntete oder gelagerte Zuckerrüben werden gewaschen, gegebenenfalls auf etwa 12°C erwärmt und anschließend, eventuell auch in grob geschnitzelter Form, in einen Zwischenbunker (11) unmittelbar über der Schneidmaschine (1) befördert, gelangen von dort aus in das Schneidwerk (1), werden zu Schnitzeln zerkleinert und gelangen dann über einen Übergabeschacht in eine Vorrichtung zum Transport des dabei erhaltenen Schnitzel-Saft-Gemisches (3). In den Zwischenbunker wird zur Minderung der mikrobiologischen Aktivitäten Kalkmilch dosiert.

Die Vorrichtung zum Transport des erhaltenen Schnitzel-Saft-Gemisches (3), auch als Schnitzelband bezeichnet, befördert dieses Gemisch zu dem Einfallschacht (13), in dem die Vorrichtung zur Elektroporation (5) integriert ist. In der Vorrichtung zur Elektroporation wird durch Zudosierung von alkalisiertem Rohsaft aus der Leitung (15), die in den Einfallschacht (13) mündet und alkalisierten Rohsaft aus der Vorrichtung zur Extraktion (9) zuführt, ein lufteinschlussfreies Medium-haltiges Schnitzel-Saft-Gemisch mit einer Leitfähigkeit von 5 mS/cm bereitgestellt. Der Einfallschacht (13) ist in seiner Höhe so ausgeführt, dass in dem Elektroporationsreaktor (5) eine Schüttdichte von 520 kg/m³ erreicht wird, wobei in dem so komprimierten Schnitzel-Saft-Gemisch keine Lufteinschlüsse oder -blasen mehr vorhanden sind. In der Vorrichtung zur Elektroporation werden nun Hochspannungspulse von 3 bis 4 kV/cm eingesetzt, wobei die Zellwände in an sich bekannter Weise aufgeschlossen werden.

Die anschließend über die Vorrichtung zur Weiterleitung (7) transportierten Rübenschnitzel und -saft werden, gegebenenfalls über einen nicht gesondert dargestellten Maischenbehälter, einer Gegenstromextraktionsanlage (9) zugeführt, in dieser extrahiert und der Extrakt aufgefangen. Die Temperatur der Extraktion beträgt von 46 bis 60°C; bevorzugt wird eine Temperatur deutlich über 46°C, maximal aber 60°C, gewählt. Der Extraktor ist ein Turmextraktor, ein Trogschnecken-Extraktor beziehungsweise ein TrommelzellenExtraktor. Im Extraktor werden die Schnitzel im Gegenstrom zum Extraktionsmittel, nämlich Frischwasser, extrahiert.

Im Anschluss daran wird eine nicht dargestellte Kalkmilch-Kohlensäure-Saftreinigung durchgeführt. Das gereinigte Extrakt (Dünnsaft I und II) wird konventionell weiterverarbeitet; das heißt nach der Eindickung des Safts zu einem Sirup wird in Kristallisatoren durch weitere Verdampfung und sukzessive Kristallisation der Zucker gewonnen. Der abgetrennte Calciumcarbonatschlamm wird konventionell über nicht dargestellte Filterpressen entwässert und als Düngemittel, sog. Carbokalk, vermarktet.

Dem erhaltenen Zellsaft wird nach vorangegangener Alkalisierung ein Flockungshilfsmittel zudosiert. Der Transportsaft wird dann einem konventionellen statischen Dekanteur zugeführt. Der Unterlauf des Dekanteurs wird abgezogen und in die Vorkalkungsanlage der parallel durchgeführten Aufarbeitung von Extrakt zugeführt. Der Klarlauf des Dekanteurs hingegen wird seiner weiteren Verwertung zugeführt, welche die Vereinigung mit Dünnsaft aus der Aufarbeitung des Extraktes umfasst. Parallel dazu wird das anfallende Extrakt einer konventionellen Saftreinigung unterzogen.

Die extrahierten Schnitzel werden in nicht dargestellte Spindelpressen abgepresst. Das abgepresste Presswasser wird in den Extraktor zurückgeführt. Die Pressschnitzel werden konventionell thermisch entwässert, das heißt in Niedertemperaturtrocknern, Hochtemperaturtrocknern beziehungsweise Verdampfungstrocknern.

## Patentansprüche

1. Verfahren zur Extraktion von Inhaltsstoffen aus Zuckerrüben umfassend die Schritte
(a) Zerkleinerung der Zuckerrüben zu Rübenschnitzeln in einer Vorrichtung zur Zerkleinerung von Rüben in Rübenschnitzel unter Erhalt eines Schnitzel-Saft-Gemisches, anschließend
(b) Zugabe von Rohsaft oder Wasser zu dem erhaltenen Schnitzel-Saft-Gemisch zum Erhalt eines aufbereiteten Schnitzel-Saft-Gemisches mit einer Leitfähigkeit von 2,6 mS/cm bis 10 mS/cm und
(c) Einstellen einer Rübenschnitzelschüttdichte von 400 kg/m³ bis 800 kg/m³ in dem aufbereiteten Schnitzel-Saft-Gemisch in einer Elektroporationsvorrichtung, anschließend
(d) Durchführen einer Elektroporation des in Schritt (c) erhaltenen aufbereiteten Schnitzel-Saft-Gemisches und anschließend
(e) Extraktion des erhaltenen elektroporierten Schnitzel-Saft-Gemisches in einem Extraktor.

2. Verfahren nach Anspruch 1, wobei die Leitfähigkeit in Schritt (b) auf 2,6 mS/cm bis 6,0 mS/cm eingestellt wird.

3. Verfahren nach Anspruch 1 oder 2, wobei die Schüttdichte in Schritt (c) auf 450 kg/m³ bis 700 kg/m³ eingestellt wird.

4. Verfahren nach einem der vorhergehenden Ansprüche, wobei in Schritt (b) und/oder im Anschluss an Schritt (d) dem Schnitzel-Saft-Gemisch Hilfsstoffe, bevorzugt Kalk und/oder Kalkmilch, zugeführt werden.

5. Verfahren nach einem der vorhergehenden Ansprüche, wobei Schritt (e) bei einer Temperatur von 0 bis 65°C, vorzugsweise von 45 bis 60°C durchgeführt wird.

6. Verfahren nach einem der vorhergehenden Ansprüche, wobei Schritt (e) eine alkalische Extraktion ist.

7. Verfahren nach einem der vorhergehenden Ansprüche, wobei der in Schritt (b) zugeführte Rohsaft ein alkalisierter Rohsaft ist.

8. Verfahren nach einem der vorhergehenden Ansprüche, wobei das aufbereitete Schnitzel-Saft-Gemisch vor der Elektroporation auf eine Temperatur von 5°C bis 40°C, vorzugsweise 10°C bis 40°C, eingestellt wird.

9. Anlage zur Extraktion und Gewinnung von Inhaltsstoffen aus Rübenschnitzeln, geeignet zur Durchführung der Verfahrensschritte gemäß einem der Ansprüche 1 bis 8, umfassend mindestens eine Vorrichtung zur Zerkleinerung von Rüben in Rübenschnitzel (1), unter Erhalt eines Schnitzel-Saft-Gemisches, mindestens eine sich daran anschließende Vorrichtung zum Transport des erhaltenen Schnitzel-Saft-Gemisches (3), mindestens eine sich daran anschließende Vorrichtung zur Elektroporation (5) des Schnitzel-Saft-Gemisches, mindestens eine sich daran anschließende Vorrichtung zur Weiterleitung des elektroporierten Schnitzel-Saft-Gemisches (7), mindestens eine sich daran anschließende Vorrichtung zur Extraktion des elektroporierten Schnitzel-Saft-Gemisches (9), und eine Vorrichtung zum Einspeisen von Rohsaft (15), insbesondere alkalisierten Rohsaft, wobei die Anlage zum Einspeisen von Rohsaft (15) so ausgebildet ist, dass sie zur Einspeisung von Rohsaft entweder in die Vorrichtung zum Transport des Schnitzel-Saft-Gemisches (3) oder in die Vorrichtung zur Elektroporation (5) geeignet ist.

10. Anlage nach Anspruch 9, wobei diese mindestens eine Dosiervorrichtung zur Dosierung von Hilfsstoffen aufweist.

11. Anlage nach einem der Ansprüche 9 oder 10, wobei die Vorrichtung zur Elektroporation (5) als Schachtreaktor ausgeführt ist.

## Claims

1. Method for extracting constituents from sugar beets comprising the steps
a) comminution of the sugar beets into beet chips in a device for comminuting beets into beet chips while obtaining a chip-juice mixture then
b) addition of raw juice or water to the chip-juice mixture obtained in order to obtain a prepared chip-juice mixture with a conductivity of 2.6 mS/cm to 10.0 mS/cm and
c) adjustment of a sugar beet bulk density of 400 kg/m³ to 800 kg/m³ in the processed chip-juice mixture in an electroporation device then
d) electroporation of the prepared chip-juice mixture obtained in step (c) and then
e) extraction in an extractor of the electroporated chip-juice mixture obtained.

2. Method according to claim 1, wherein the conductivity in step (b) is adjusted to 2.6 mS/cm to 6.0 mS/cm.

3. Method according to claim 1 or 2, wherein the bulk density in step (c) is adjusted to 450 kg/m³ to 700 kg/m³.

4. Method according to one of the preceding claims, wherein in step (b) and/or following step (d) excipients, preferably lime and/or milk of lime, are added to the chip-juice mixture.

5. Method according to one of the preceding claims, wherein step (e) is carried out at a temperature of 0 to 65°C, preferably from 45 to 60°C.

6. Method according to one of the preceding claims, wherein step (e) is an alkaline extraction.

7. Method according to one of the preceding claims, wherein the raw juice added in step (b) is an alkalized raw juice.

8. Method according to one of the preceding claims, wherein the prepared chip-juice mixture is adjusted before electroporation to a temperature of 5°C to 40°C, preferably 10°C to 40°C.

9. Installation for extracting and recovering constituents from beet chips suitable for carrying out the method steps according to one of the claims 1 to 8, comprising at least one device for comminuting beets into beet chips (1) while obtaining a chip-juice mixture, at least one adjoining device for transporting the chip-juice mixture obtained (3), at least one adjoining device (5) for the electroporation of the chip-juice mixture, at least one adjoining device to transfer the electroporated chip-juice mixture (7), at least one adjoining device to extract the electroporated chip-juice mixture (9), and a device for feeding in raw juice (15), specifically alkalized raw juice, wherein the installation for feeding in raw juice (15) is configured such that it is suitable for feeding in raw juice either into the device for transporting the chip-juice mixture (3) or into the electroporation device (5).

10. Installation according to claim 9, wherein it has at least one metering device to meter excipients.

11. Installation according to one of the claims 9 or 10, wherein the electroporation device (5) is designed as a shaft reactor.

## Revendications

1. Procédé d'extraction d'ingrédients de betteraves à sucre comprenant les étapes de
(a) fractionnement des betteraves à sucre en cossettes de betterave dans un dispositif de fractionnement de betteraves en cossettes de betterave avec obtention d'un mélange de cosettes et de jus, puis
(b) addition de jus brut ou d'eau au mélange de cossettes et de jus obtenu pour l'obtention d'un mélange de cossettes et de jus traité avec une conductivité de 2,6 mS/cm à 10 mS/cm et
(c) réglage d'une densité en vrac de cossettes de betterave de 400 kg/m³ à 800 kg/m³ dans le mélange de cossettes et de jus traité dans un dispositif d'électroporation, puis
(d) réalisation d'une électroporation du mélange de cossettes et de jus traité obtenu à l'étape (c), et ensuite
(e) extraction du mélange de cossettes et de jus obtenu ayant subi une électroporation dans un extracteur.

2. Procédé selon la revendication 1, dans lequel la conductivité à l'étape (b) est réglée à 2,6 mS/cm à 6,0 mS/cm.

3. Procédé selon la revendication 1 ou 2, dans lequel la densité en vrac à l'étape (c) est réglée à 450 kg/m³ à 700 kg/m³.

4. Procédé selon l'une quelconque des revendications précédentes, dans lequel des adjuvants, de préférence de la chaux et/ou du lait de chaux, sont alimentés au mélange de cossettes et de jus à l'étape (b) et/ou suite à l'étape (d).

5. Procédé selon l'une quelconque des revendications précédentes, dans lequel l'étape (e) est réalisée à une température de 0 à 65°C, de préférence de 45 à 60°C.

6. Procédé selon l'une quelconque des revendications précédentes, dans lequel l'étape (e) est une extraction alcaline.

7. Procédé selon l'une quelconque des revendications précédentes, dans lequel le jus brut alimenté à l'étape (b) est un jus brut alcalinisé.

8. Procédé selon l'une quelconque des revendications précédentes, dans lequel le mélange de cossettes et de jus traité est réglé avant l'électroporation à une température de 5°C à 40°C, de préférence 10°C à 40°C.

9. Installation pour l'extraction et la récupération d'ingrédients de cossettes de betterave appropriée à la réalisation des étapes de procédé selon l'une quelconque des revendications 1 à 8, comprenant au moins un dispositif pour le fractionnement de betteraves en cossettes de betterave (1) avec obtention d'un mélange de cossettes et de jus, au moins un dispositif qui s'y raccorde pour le transport du mélange de cossettes et de jus obtenu (3), au moins un dispositif qui s'y raccorde pour l'électroporation (5) du mélange de cossettes et de jus, au moins un dispositif qui s'y raccorde pour la transmission du mélange de cossettes et de jus ayant subi une électroporation (7), au moins un dispositif qui s'y raccorde pour l'extraction du mélange de cossettes et de jus ayant subi une électroporation (9), et un dispositif pour l'alimentation de jus brut (15), notamment de jus brut alcalinisé, dans laquelle l'installation pour l'alimentation de jus brut (15) est réalisée de sorte qu'elle est appropriée à l'alimentation de jus brut soit dans le dispositif pour le transport du mélange de cossettes et de jus (3), soit dans le dispositif pour l'électroporation (5).

10. Installation selon la revendication 9, dans laquelle celle-ci présente au moins un dispositif de dosage pour le dosage d'adjuvants.

11. Installation selon l'une quelconque des revendications 9 ou 10, dans laquelle le dispositif pour l'électroporation (5) est réalisé en tant que réacteur à cuve.
